Europäisches Patentamt

(19) European Patent Office

Office européen des brevets

(11) Numéro de publication : **0 307 256 B1**

(12) **FASCICULE DE BREVET EUROPEEN**

(45) Date de publication du fascicule du brevet :
**21.11.91 Bulletin 91/47**

(51) Int. Cl.⁵ : **B21D 47/00**

(21) Numéro de dépôt : **88401788.0**

(22) Date de dépôt : **08.07.88**

(54) **Procédé de fabrication d'outillages dits "mannequins".**

(30) Priorité : **08.09.87 FR 8712432**

(43) Date de publication de la demande :
**15.03.89 Bulletin 89/11**

(45) Mention de la délivrance du brevet :
**21.11.91 Bulletin 91/47**

(84) Etats contractants désignés :
**BE DE ES GB IT NL SE**

(56) Documents cités :
**FR-A- 2 502 519**
**GB-A- 2 096 517**
**US-A- 3 170 428**

(73) Titulaire : **AEROSPATIALE Société Nationale Industrielle**
**37, Boulevard de Montmorency**
**F-75781 Paris Cédex 16 (FR)**

(72) Inventeur : **Pujol, Claude Pierre**
**Route de Monte-Cristo**
**F-09700 Saverdun (FR)**

(74) Mandataire : **Barnay, André François**
**Cabinet Barnay 80 rue Saint-Lazare**
**F-75009 Paris (FR)**

EP 0 307 256 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention est selon le préambule de la revendication 1 relative à un procédé de fabrication d'outillages du type comportant une armature pouvant soutenir un revêtement ayant la forme d'une pièce à réaliser.

Dans l'industrie métallurgique en général : construction aéronautique et automobile, chantiers navals, appareils électro-ménagers, fonderies, il est courant de matérialiser la forme et le profil extérieurs de pièces en tôle devant être réalisées ensuite en série, en construisant une armature en un matériau quelconque, cette armature formant le support d'un revêtement, ou garnissage, cet outillage appelé "mannequin" étant ensuite utilisé pour contrôler la bonne réalisation de pièces au cours de leur fabrication, par présentations successives au cours des opérations de formage et de détourage.

Un tel mannequin peut également être utilisé pour la fabrication d'outils d'emboutissage destinés à la fabrication des pièces finies. Il est normalement formé d'une semelle support et d'une armature fixée sur celle-ci, cette armature comprenant des plaques dites "peignes" reliées entre elles par des tiges, fils métalliques, soudures, vis ou tiges filetées.

La réalisation de ces mannequins a jusqu'à présent nécessité des opérations compliquées, longues et coûteuses faisant intervenir un personnel spécialisé et nombreux.

Actuellement, en effet, un premier stade, de conception, nécessite l'étude traditionnelle d'outillage à la planche à dessin, puis dans une autre phase, on doit effectuer la préparation nécessaire afin que le bureau d'études puisse réaliser un tracé en vraie grandeur de toutes les pièces de l'armature du mannequin.

Une fois tracées, ces pièces doivent être détourées, percées, ajustées, vérifiées, et une nouvelle opération d'ajustage est nécessaire pour brocher les reproductions en tracé grandeur sur les peignes.

Toutes ces opérations doivent être effectuées avec une extrême précision, nécessitant de nombreux contrôles et, dans le meilleur des cas, la précision du mannequin fini est de l'ordre de ± 0,5 mm alors que la précision requise, suivant les normes actuelles, doit être de ± 0,15 mm.

Le but de l'invention est de supprimer ces opérations longues, compliquées, onéreuses, ainsi que les erreurs qu'elles peuvent entraîner.

L'invention a pour objet à cet effet un procédé de fabrication d'outillages dits "mannequins" constitués par une armature formée de peignes pouvant porter une garniture et matérialisant la forme et le profil extérieurs de pièces en tôle devant être réalisées, procédé dans lequel on utilise des données définissant la forme d'une pièce établie au préalable par un bureau d'études, caractérisé par les phases suivantes :

a) On saisit les lites données sur un ordinateur travaillant avec logiciel connu de conception et fabrication assistées (CFAO),

b) on trace la forme du mannequin ainsi fini,

c) on établit, toujours avec le même logiciel, un certain nombre de sections verticales planes, qui représentent les peignes, au moins une entretoise, et délimitent une semelle pour le mannequin,

d) on compose une panoplie, par mise à plat et imbrication desdites sections, et de ladite semelle, au moyen d'un second programme,

e) on transfère les données mémorisées de ladite panoplie sur un support magnétique approprié pour assurer la commande d'une machine à laser, en adaptant ces données à la commande numérique de ladite machine, au moyen d'un autre programme,

f) on découpe les pièces de la panoplie sur la machine à laser,

g) on assemble et on fixe ensemble lesdites sections, l'entretoise et la semelle, et si nécessaire on applique un revêtement, ou garniture, sur l'ossature ainsi réalisée.

La description qui va suivre, en regard des dessins annexés à titre d'exemple non limitatif, permettra de bien comprendre comment l'invention peut être mise en pratique.

La figure 1 est une vue du tracé du volume d'un mannequin, suivant le procédé CFAO.

La figure 2 fait apparaître sur le tracé de la figure 1 des plans de coupe perpendiculaires à un plan de base.

La figure 3 fait apparaître les peignes, les entretoises d'assemblage et la semelle, et sur tous ces organes, des encoches complémentaires, qui permettront l'assemblage.

La figure 4 montre la panoplie obtenue par la mise à plat et l'imbrication des différents organes en vue de leur découpage.

Suivant le procédé de l'invention on a tout d'abord introduit dans un ordinateur les données d'un certain nombre de points P1, P2, P3......P11, définissant la pièce finie établie par un bureau d'études.

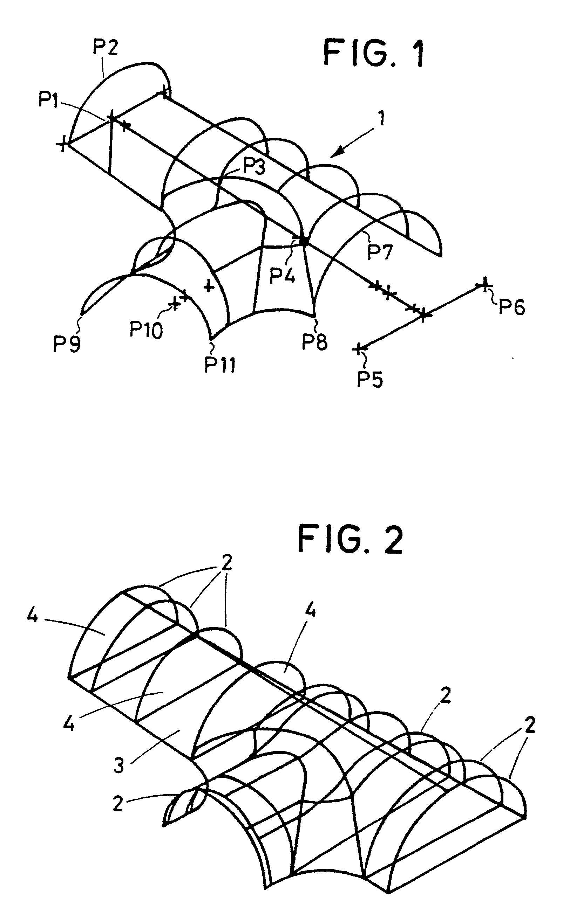

A partir de ces données et au moyen d'un programme de conception et fabrication assistées par ordinateur (CFAO) connu en lui-même, on produit un tracé de la forme du mannequin, désignée dans son ensemble par la référence 1 et représentée à la figure 1, sur laquelle on a porté les différents points P1, P2,........P11 dont les données ont permis l'établissement.

Lorsque ce tracé est obtenu on établit, toujours au moyen du même logiciel, un certain nombre de plans de coupes définissant des sections droites du mannequin, coupant sa surface et désignés par la référence 2. Le nombre et la position de ces sections sont fonction de la dimension du mannequin pour obtenir la précision désirée.

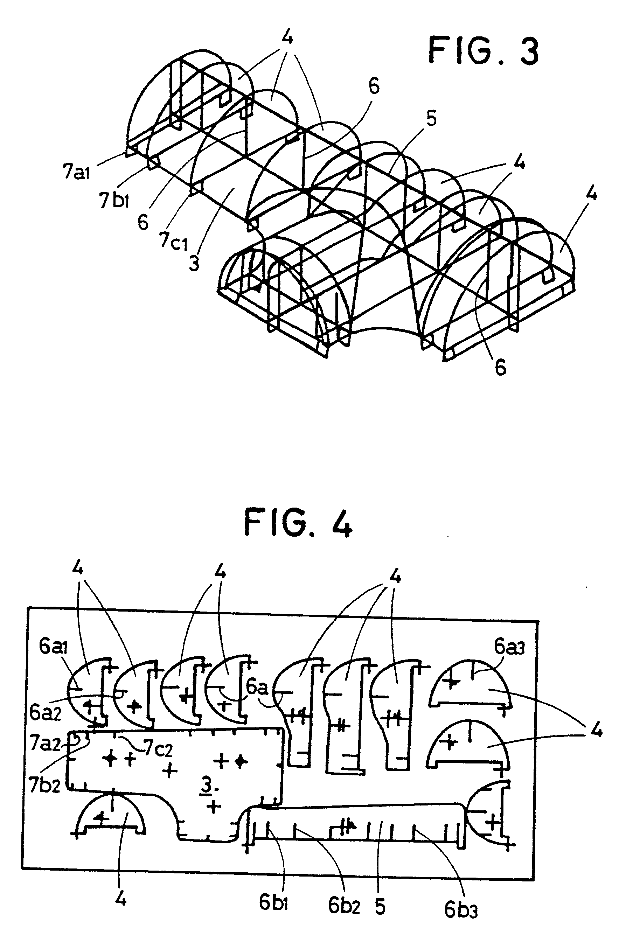

A partir de chacune de ces sections 2, on peut alors établir les contours d'une semelle 3, de peignes 4, et d'une ou plusieurs entretoises 5, destinés à constituer l'ossature du mannequin, comme représenté à la figure 3, qui montre également les lignes d'intersection 6 des peignes 4 avec l'entretoise 5.

Les lignes d'intersection 6 sont utilisées pour réaliser l'assemblage des peignes 4 et de l'entretoise 5. Dans ce but, une moitié de chacune de ces lignes est tracée sur chaque peigne 4 comme représenté en 6a, et la moitié correspondante 6b est tracée sur l'entretoise, comme représenté en 6a1, 6a2, 6a3 et 6b1, 6b2, 6b3 etc.. comme indiqué à la figure 4. Les lignes représentent les fentes d'assemblage des pièces, qui sont fonction de l'épaisseur des peignes.

Pour assembler la semelle 3, et les peignes 4, il est prévu aux extrémités de ceux-ci des pattes 7a1, 7b1, 7c1, etc.. destinées à s'engager dans des fentes correspondantes 7a2, 7b2, 7c2, etc.. prévues dans les bords de la semelle 3, et qui sont simplement tracées comme les moitiés des fentes d'assemblage à chaque intersection 6 (figure 4).

Au moyen du programme d'ordinateur créé on compose une panoplie par mise à plat et imbrication des peignes 4, de la ou des entretoises 5 et de la semelle 3 comme représenté à la figure 4.

Grâce au programme d'ordinateur utilisé pour réaliser la panoplie, les données de celle-ci sont mémorisées dans l'ordinateur, et ces données sont destinées à être utilisées pour commander une machine de détourage à laser à commande numérique, afin de découper les pièces du mannequin dans la panoplie.

Dans ce but, suivant l'invention, on établit un programme simple pour transférer les données de la panoplie, mémorisées en ordinateur, sur un support magnétique (bande, cassette, floppy ou autre support approprié en fonction du dispositif de commande de la machine à laser), sous une forme appropriée pour commander le fonctionnement de la machine, et on découpe les pièces de la panoplie, y compris les tracés des fentes.

On assemble enfin les pièces découpées par engagement mutuel des demi-fentes des peignes 4, celles de l'entretoise 5 et des pattes des peignes dans les fentes de la semelle 3.

Après ajustement, on immobilise les pièces les unes par rapport aux autres par des points de colle ou de soudure.

L'ossature du mannequin ainsi terminée peut alors être revêtue d'une garniture, le cas échéant. Cependant une ossature suffisamment dense, c'est-à-dire comportant des peignes assez rapprochés, permet pour certaines applications d'éviter un revêtement.

Le procédé suivant l'invention présente de nombreux avantages, en effet l'utilisation de l'ordinateur permet de définir toutes les formes et d'obtenir le profil des peignes avec une précision supérieure à celle obtenue par le procédé classique dans un temps beaucoup plus court et avec une réduction considérable du volume de travail nécessaire, le gain de temps étant de l'ordre de 65%.

La précision obtenue est de ± 0,05 mm sur le mannequin fini, bien supérieure à celle des outillages réalisés jusqu'à présent. Le gain ainsi apporté se traduit par une économie très appréciable sur le prix de revient qui est divisé par 10.

## Revendications

1. Procédé de fabrication d'outillages dits "mannequins" (1), constitués par une armature formée de peignes (4) pouvant porter une garniture et matérialisant la forme et le profil extérieurs de pièces en tôle devant être réalisées, procédé dans lequel on utilise des données définissant la forme de la pièce établie au préalable par un bureau d'études, caractérisé par les phases suivantes :

a) on saisit lesdites données sur un ordinateur travaillant avec un logiciel connu classique de conception et de fabrication assistées (CFAO),

b) on trace la forme du mannequin ainsi fini,

c) on établit, toujours au moyen du même logiciel, un certain nombre de sections (2) verticales planes, qui représentent les peignes, au moins une entretoise (5), et délimitent une semelle (3) pour le mannequin,

d) on compose une panoplie, par mise à plat et imbrication desdites sections, et de ladite semelle, au moyen d'un second programme,

e) on transfère les données mémorisées de ladite panoplie sur un support magnétique approprié pour assurer la commande d'une machine à laser, en adaptant ces données à la commande numérique de ladite machine, au moyen d'un autre programme,

f) on découpe les pièces de la panoplie sur la machine à laser,

g) on assemble et on fixe ensemble lesdites sections, l'entretoise et la semelle, et si nécessaire on applique un revêtement, ou garniture, sur l'ossature ainsi réalisée.

2. Procédé suivant la revendication 1, caractérisé en ce que, dans la phase c) on établit des sections verticales transversales qui définissent les peignes (4) et des sections verticales perpendiculaires aux premières, ou longitudinales, qui définissent au moins une entretoise (5).

3. Procédé suivant la revendication 2, caractérisé en ce que, dans la phase d) on mémorise, avec le contour à plat des différents organes de l'ossature, les lignes d'intersection (6) de ces organes.

4. Procédé suivant la revendication 3, caractérisé en ce que le contour à plat des peignes sur la panoplie comporte des pattes de fixation (7a1, 7b1, 7c1) sur la semelle (3).

5. Procédé suivant la revendication 2, caractérisé en ce que, dans la phase c) on trace des fentes en coupant une moitié desdites lignes d'intersection (6) sur les peignes (4) et la moitié opposée desdites lignes (6) sur les entretoises (5), et une partie desdites lignes (6) correspondant auxdites pattes (7a1, 7b1, 7c1) des peignes.

6. Procédé suivant la revendication 5, caractérisé en ce que, dans la phase g) l'assemblage est réalisé en engageant les différents organes (3, 4, 5) par leurs fentes respectives, et on les immobilise par des points de colle ou de soudure.

7. Procédé suivant la revendication 1, caractérisé en ce que, dans la phase e) on transforme les coordonnées octogonales des points géométriques projetés des différentes pièces sur ladite panoplie en données numériques, et on code lesdites données numériques en concordance avec le code particulier de commande de la machine laser utilisée pour découper lesdites pièces sur ladite panoplie.

**Patentansprüche**

1. Verfahren zur Herstellung von Arbeitsgeräten in Form von Modellen (1), die von einer durch Stege geformten Umhüllung gebildet sind, wobei die Stege einen Überzug tragen und die Form und das äußere Profil von Werkstücken aus Blech vor deren Fertigung erkennen lassen, wobei bei dem Verfahren von einem Entwicklungsbüro vorläufig erstellte, die Form des Werkstückes festlegende Daten verwendet werden, gekennzeichnet durch folgende Verfahrensschritte :

   a) Die Daten werden in einem Computer erfaßt, der mit einem üblichen CAD- und CAM-Programm arbeitet,

   b) die Form des so fertig gestellten Modells wird aufgezeichnet,

   c) es werden mit demselben Computerprogramm eine bestimmte Anzahl von ebenen vertikalen Querschnittsflächen (2) erstellt, die die Stege und wenigstens eine Querstrebe (5) darstellen und an einer Grundplatte (3) für das Modell angrenzen,

   d) mit Hilfe eines zweiten Computerprogrammes wird durch Projektion in eine Ebene und Ineinanderschachtelung der Querschnitte und der Grundplatte eine Werkstücktafel hergestellt,

   e) die gespeicherten Daten der Werkstücktafel werden auf ein geeignetes Magnetspeichermedium zur Ansteuerung einer Laservorrichtung übertragen, wobei diese Daten an die numerische Steuerung der Laservorrichtung mit Hilfe eines weiteren Computerprogrammes angepaßt werden,

   f) die Teile der Werkstücktafel werden auf der Laservorrichtung ausgeschnitten,

   ; die Querschnittsflächen, die Querstrebe und die Grundplatte werden zusammengefügt und befestigt, wobei gegebenenfalls auf dem auf diese Weise gefertigten Tragwerk eine Verkleidung oder ein Aufsatz angebracht wird.

2. Verfahren nach Anspruch 1, dadurch gekennzeichnet, daß im Verfahrensschritt c) transversal verlaufende Querschnittsflächen erstellt werden, die die Stege (4) bestimmen, sowie hierzu senkrecht verlaufende oder longitudinale Querschnittsflächen, die wenigstens eine Querstrebe (5) bestimmen.

3. Verfahren nach Anspruch 2, dadurch gekennzeichnet, daß im Verfahrensschritt d) die projizierten Umrisse der verschiedenen Elemente des Tragwerks zusammen mit ihren Einschnittlinien (6) abgespeichert werden.

4. Verfahren nach Anspruch 3, dadurch gekennzeichnet, daß der projizierte Umriß der Stege auf der Werkstücktafel Anschlußlappen (7a1, 7b1, 7c1) zur Befestigung an der Grundplatte (3) aufweist.

5. Verfahren nach Anspruch 2, dadurch gekennzeichnet, daß im Verfahrensschritt c) Schlitze gezogen werden, indem jeweils die eine Hälfte der Einschnittlinien (6) auf den Stegen (4) und die gegenüber liegende Hälfte der Einschnittlinien (6) auf den Querstreben (5) und ein Teil der Einschnittlinien (6) entsprechend auf den Anschlußlappen (7a1, 7b1, 7c1) der Stege eingeschnitten werden.

6. Verfahren nach Anspruch 5, dadurch gekennzeichnet, daß die Montage in Verfahrensschritt g) durch Verbinden der verschiedenen Elemente (3, 4, 5) über die jeweiligen Schlitze durchgeführt wird, wobei die Elemente (3, 4, 5) durch Klebstoff- oder Schweißnahtpunkte fixiert werden.

7. Verfahren nach Anspruch 1, dadurch gekennzeichnet, daß im Verfahrensschritt e) die Achteck-Koordinaten der projizierten geometrischen Punkte der verschiedenen Werkstücke auf der Werkstücktafel in numerische Daten transformiert werden, und daß die numerischen Daten in Übereinstimmung zum Programmcode der Steuerung der Laservorrichtung für das Ausscheiden der Werkstücke auf der Werkstücktafel codiert werden.

**Claims**

1. A process for the manufacture of tooling called "models " ("mannequins ") (1), constituted by a frame formed from combs (4) able to carry a covering and embodying the shape and exterior profile of sheet-metal components that are to be manufactured, a process in which one uses data defining the shape of the article previously established by a drawing-office, characterised by the following steps :

   a) one enters said data in a computer operating with a known program for assisted design and manufacture (CFAO),

b) one maps out the shape of the model thus defined,

c) one creates, still with the same program, a certain number of planar vertical sections (2) which represent the combs, at least one spacer (5) and defines a base (3) for the model,

d) one creates an array, by putting said sections and said base flat and interfitting, by means of a second program,

e) one transfers the memorised data of said array onto a suitable magnetic medium for controlling a laser cutter, adapting these data for the numerical control of said machine, by means of another program,

f) one cuts out the components of the array on the laser cutter,

g) one assembles and fixes together said sections, the spacer and the base, and if necessary one applies a cover or facing to the skeleton thus manufactured.

2. A process according to claim 1, characterised in that in step c) one establishes transverse vertical sections which define the combs (4) and vertical sections perpendicular to the first, or longitudinal, which define at least one spacer (5).

3. A process according to claim 2, characterised in that in step d) one memorises, with the flat outline of different components of the skeleton, the lines of intersection (6) of these components.

4. A process according to claim 3, characterised in that the flat outline of the combs in the array include feet (7a1, 7b1, 7c1) for fixing onto the base (3).

5. A process according to claim 2, characterised in that in step c) one draws slots by cutting half said lines of intersection (6) in the combs (4) and the opposite half of said lines (6) in the spacers (5), and a part of said lines (6) corresponding to said feet (7a1, 7b1, 7c1) of the combs.

6. A process according to claim 5, characterised in that in step g) the assembly is effected by engaging the different components (3, 4, 5) by their respective slots, and one fixes them by spots of glue or of welding.

7. A process according to claim 1, characterised in that in step e) one transforms the octagonal co-ordinates of the geometric projected points of different components of the array into numerical data, and one codes said numerical data in agreement with the particular command code of the laser cutter used to cut said components in said array.

# FIG. 1

P2
P1
1
P3
P7
P4
P9
P10
P11
P8
P6
P5

# FIG. 2

2
4
4
4
3
2
4
2
2
2

# FIG. 3

# FIG. 4